# EUROPEAN PATENT SPECIFICATION

(11) **EP 0 299 383 B1**
(45) Date of publication and mention of the grant of the patent: **23.11.1994**
(21) Application number: 88110945.8
(22) Date of filing: 08.07.1988
(51) Int. Cl.: G06K 19/06

(54) **Method of reading identification code sheets**
Verfahren zum Lesen von Blättern mit Identifikationscode
Procédé de lecture de feuilles à code d'identification

(30) Priority: 11.07.1987 JP 173352/87; 17.09.1987 JP 232983/87
(43) Date of publication of application: 18.01.1989
(73) Proprietor: Yoshida, Hirokazu, Osaka-shi, Osaka 543 (JP)
(72) Inventor: Yoshida, Hirokazu, Osaka-shi, Osaka 543 (JP)
(74) Representative: Ritter und Edler von Fischern, Bernhard,Dipl.-Ing.

(56) References cited:
- US-A- 3 573 436
- US-A- 3 898 434
- US-A- 4 143 810
- US-A- 4 263 504
- US-A- 4 286 146
- US-A- 4 430 563

## Description

The invention relates to a method of reading an identification code sheet carrying an identification code. Such identification code sheet may carry information representing a merchandise code, a character string or any symbol capable of identifying a numerical character, an alphabet, a Kana-Kanzi character etc.

There are two basic forms of identification representation on identification code sheets which are a bar code and a token code to represent a numerical character and/or a symbol.

As well known, said bar code is set up by a plurality of thin and thick bars, spaced regularly and combined to represent a numerical character etc. In general the bar code has the draw back that it requires a high level of accuracy for preparation so that the printing equipment for printing bar codes needs to be of a high level and therefore costly.

The other type of identification code is known from US-A-4.286.146 which discloses a coded label and a code reader for the coded label. Each coded label comprises a code pattern in which first and second segments respectively being substantially square and having reflection factors different from each other are arranged in at least four rows and two columns and in which at least two of either of the first and second segments are arranged in each column and at least one is arranged in each of the upper most and lower most rows. The code pattern is formed by putting one or more of such rectangular segments into the state "1" and the others into the state "0" and by putting the area surrounding the rectangular pattern into the state "0". As the pattern is composed of segments in rows and columns the decoding and processing is easy of automatic reading.

US-A-3.573.436 discloses a method and an apparatus for reading tickets which can be printed by a conventional computer printer and include markings arranged to a predetermined code on a portion of the ticket in rows and columns. The region of the ticket which is intended to bare coded information is provided with identical markings which are rectangular bars. Between each marking a gap is provided which is made identical to normal character spacing of the employed conventional computer printer. Several groups of marking are identified to carry different information related to specific subjects. Moreover, a group of markings is provided serving as a clock to identicate that each line of markings has been read.

US-A-4.430.563 describes a data processing form for controlling a scanning facsimile machine. The data processing form comprises a rectangular sheet of paper having darkened areas which establish a row and column formate with an elongate edge mark provided for each row. The rectangular darkened areas extend lengthwise and generally parallel to a straight edge of a rectangular sheet of paper. The rows defined by the rectangular darkened areas are equally spaced apart. Each of the rows extends transverse to the straight edge with the space present between each adjacent one of the rectangular darkened areas in any given row being greater than the width of the rectangular darkened areas. An edge mark is positioned so that its lengthwise position is transversed to the straight edge of the sheet of paper. Additionally, the edge mark is sensored relative to the length of the rectangular darkened areas for a given row.

US-A-3.898.434 describes a machine readable code member which has character pattern areas positioned with large tolerance to a reference line. Each pattern area is rectangular and is divided equally into pattern portions. The presence or absence of indicia in selected pattern portion within each pattern area represents a designated character. Each pattern portion within a pattern area is bound on at least two sides thereof at two adjacent pattern portions. An index mark or portion is provided for each pattern area. The coded member is of the type which is movable to permit a scanner to read the coded member. At least two of the pattern portions of each pattern area are aligned along a path of travel of coded member with respect to such a scanner. However, the index mark or portion is not aligned of any of the pattern portion of the corresponding pattern area along the path of travel of the incode member in the scanner.

Although the representation of data in a two-dimensional printed array is well known from the above prior art documents, there is still the need for further improvement, especially in those cases where the identification code sheet may be subjected to deformation due to elongation or shrinkadge of the paper for irregularity of the surfaces on which the paper is attached or where the view angle of the reading device differs from an almost vertical position.

It is therefore an object of the present invention to provide an improved method of reading on identification code sheet, wherein an exact reading of signal codes can be obtained at a very high level of accuracy and speed, without any limitation to the available reading direction and without the need for use of the special quality paper or special quality printing means.

This object is solved according to the present invention by a method of reading an identification code sheet carrying an identification code by means of a sensor, the identification code sheet comprising
- an identification code area
   - being defined by two lines representing an X-axis and an Y-axis, respectively, by which lines an L-shaped letter is formed and
   - being provided to serve as a reserved space for the identification code; and
   - a plurality of sub-areas
   - being defined in said identification code area in that said identification code area is divided into said sub-areas by separation marks,
   - each sub-area corresponding to one binary signal of the identification code;
   the method comprising the steps of:
- detecting with said sensor the line representing the X-axis defining the identification code area;
- detecting with said sensor the line representing the Y-axis defining the identification code area;
- determining the identification code area defined by said detected lines;
- detecting with said sensor said separation marks in the identification code area;
- identifying said sub-areas depending on said detected separation marks; and
- interpreting the signal code represented in the form of binary signals in said sub-areas within the identification code area.

An identification code sheet for carrying an identification code comprises an identification code area being defined by two lines representing an X-axis and a Y-axis, respectively, by which lines an L-shaped letter is formed and being provided to serve as a reserved space for the identification code; and a plurality of sub-areas being defined in said identification code area in that said identification code area is divided into said sub-areas by separation marks, each sub-area corresponding to one binary signal of the identification code.

Advantageous embodiments of the method of reading the identification code sheet according to the invention are described in the subclaims.

In the following the invention will be described with reference to the drawings wherein preferred embodiments of the invention are shown.

### BRIEF DESCRIPTION OF DRAWINGS

Fig.1 is a plan view of an identification code sheet representing an embodiment of the invention, with partial cut-away;
Figs.2 (a), (b), (c), (d) and (e) are plan views showing variations of the embodiments of the invention, related to a representation area in the code sheet described above;
Fig.3 is a view illustrating sub-area and the assemblies of the invention, related to the representation area described above;
Fig.4 is a view illustrating a pattern of coding showing the number and the location of the sub-area where binary code marks exist relative to binary codes;
Figs.5 (a), (b), (c), (d) and (e) are detail views showing a concept of the embodied binary signal mark respectively of the invention;
Fig.6 is a plan view of an identification code sheet comprising the characters mentioned, with partial cut-away;
Fig.7 shows a concept of assemblies representing grouped sub-areas,
Figs.8 (a) and (b) are illustrations of a representation area having an auxiliary mark according to another embodiment for the identification code sheet;
Fig.9 shows a concept of a respresentation area having separation lines according to another embodiment;
Fig.10 is an illustration of representation area comprising separation marks, according to a still further embodiment of the invention;
Fig.11 and Fig.12 show diagrams wherein the binary code marks are included;
Fig.13 and Fig.14 give the patterns enabling establishment of both the sub-areas and assemblies of the representing area;
Fig.15 and Fig.16 show a block diagram illustrating a method of reading an identification code sheet according to the invention;
Fig.17 is a flow chart showing a method of reading the identification code sheet according to the invention;
Figs.18 (a), (b), (c) and (d) show concepts of an arrangement of the auxiliary mark or marks of another embodiment of the representation area according to the invention;
Figs.19 (a), (b) and (c) give concepts of further another embodiment of the representation area having gaps according to the invention; and
Figs.20 (a), (b), (c) and (d) show various embodiments where the X-axis and the Y-axis are arranged skew relative to each other, representing still further another embodiment of the invention.

### DETAILED DESCRIPTION OF THE INVENTION

There follows the detailed description of the preferred embodiments of the invention relative to the accompanying drawings, wherein the numerals in the different views identify identical parts.

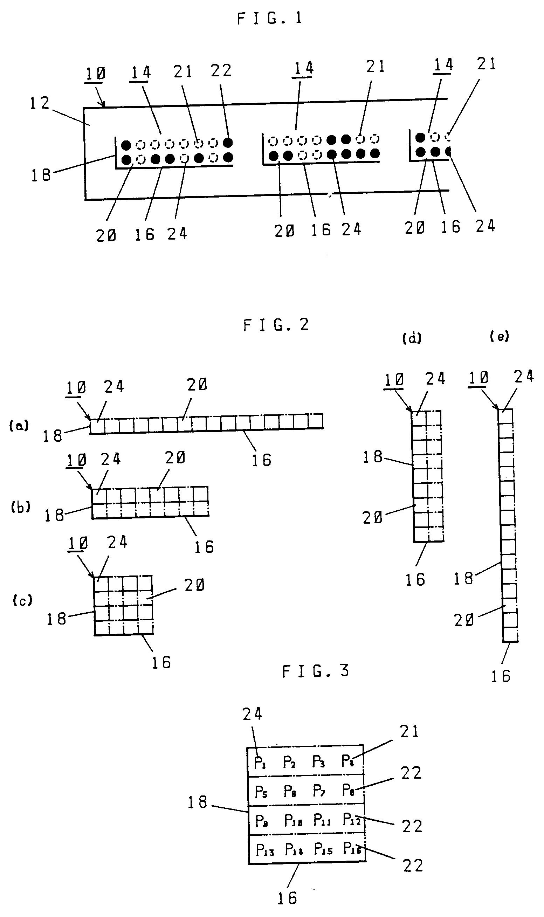

In Fig.1, is shown an embodiment of the invention in form of a strip of identification code sheet 10. Said identification code sheet 10 is a strip of code sheet 12 which may be of either paper or plastic film and the likes. In the center zone of said strip is printed an representation area 14 on the face of the identification code sheet 12. Said representation area 14 bears the representation area 20 definded by a X-axis 16 and a Y-axis 18 in form orthogonal coordinates, wherein a signal codes 22 is printed to represent identification codes 21 in said representation area 20.

Said representation area 20 is sub-divided into sixteen sub-areas 24, in each of which a signal code 22 in terms of binary signal codes of 0 or 1 is to be printed; said area 20 may be of various shapes as illustrated in Fig.2. Fig.2(a) gives an illustration of the embodiment where a series of signal codes 22 is arranged in a straight line, with length ratio of X-axis 16 to Y-axis 18 of 16:1.

Fig.2 (b) shows another embodiment where a series of signal codes 22 is arranged in double straight lines, with X-Y axis length ratio of 4:1. Fig.2 (c) represents a similar embodiment, with X-Y length ratio of 1:1. Figs.2 (d) and (e) give further another embodiment, with X-Y length ratio, contrary to the same of Figs. 2 (a) and (b) of 4:1 and 16:1 respectively, to form a longitudinal elongated shape of sheet. The shape of the identification code sheet may be changed properly to meet a particular need case by case as may be found necessary.

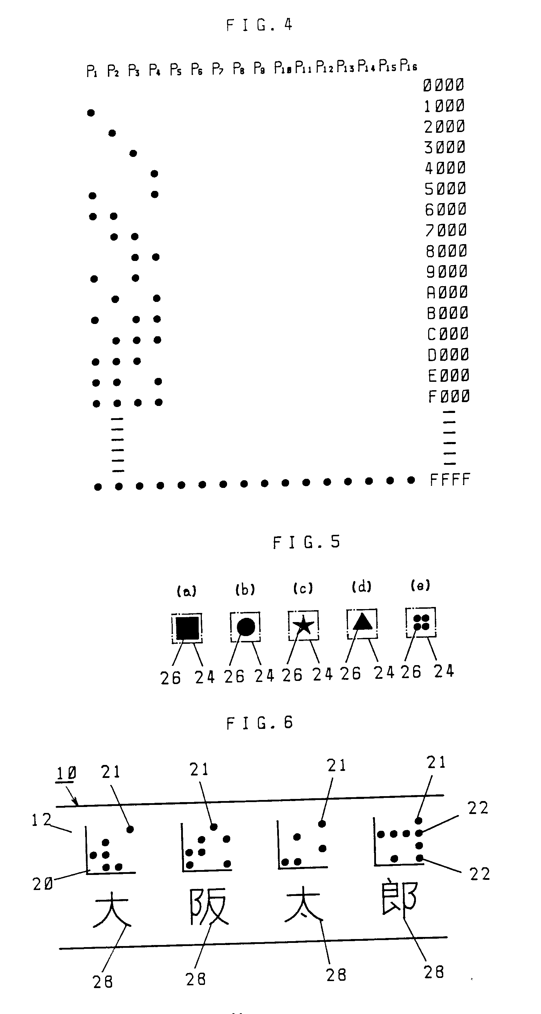

The sub-areas 24 in the reprensetation area 20 are designed, as illustrated in Fig.3, to provide a record of the identification code 21, according to 2¹⁶ binary codes as represented by 0000, 1000, 2000, · · · FFFF as illustrated in Fig.4, by arranging P₁, P₂, P₃ · · · P₁₆ in a horizontal row and in an appropriate order and addressing them and subsequently making record, in P₁, P₂, P₃ · · · P₁₆, of a binary signal of either 0 or 1 as may be found necessary. Said binary signal 26 used to print in the individual sub-areas 24 may have various shapes as shown in Fig.5. In Fig.5 (a) is given an example of mark filling up almost totally a sub-area 24 of a rectangular form, while Figs.5 (b), (c), (d) and (e) show other marks of round, star,triangle and four-dot combination form, with a blank left in the periphery of said sub-area 24.

To representation of the representation area 20 and/or the signal code 22 on the identification sheet 10 mentioned precedingly, a suitable printing means of an ordinary type may be applied, and presently commercially available microcomputer and handy computer or 11- or 24-dot type may also be used for the purpose mentioned. For printing, name of merchandize, name of section in charge, office address, name of person, telephon number and any other similar character string, message and statement of advertisement may be converted through the microcomputer, according to JIS rule of coding (or the corresponding similar rule of other countries) and a single representation area 20 of one of 2¹⁶ signal codes 22 for every character. For this, it is preferable to have prior representation of the identification code 21 in terms of a character 28 of Kana-Kanzi, English or some other languages as may be found necessary at a location next to the bottom portion or the likes of the representation area 20 for individual signal codes 22, as illustrated in Fig.6, to facilitate a visual confirmation. This enables one identification code to be expressed as a single character just equivalent to a single identification code thus providing a clean representation in parallel as shown in Fig.6.

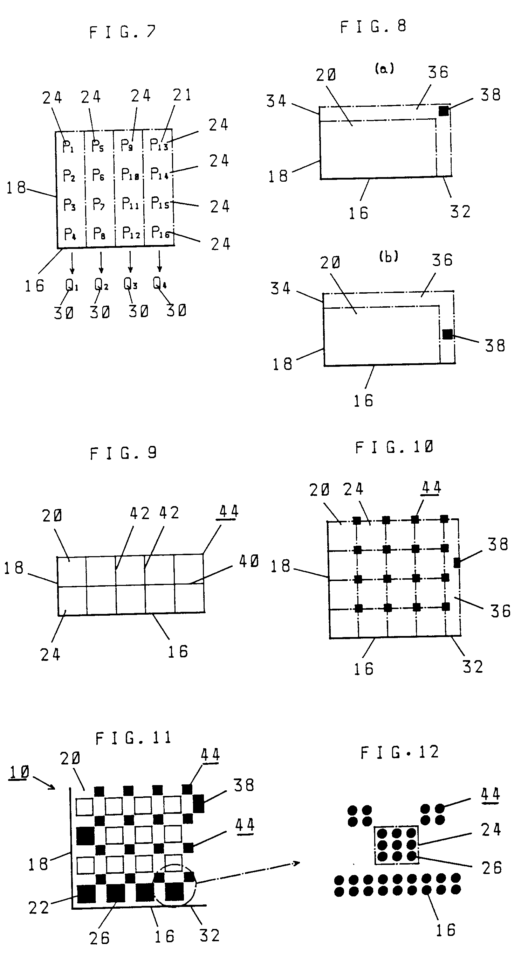

Fig.7 represents another embodiment of the invention, where a signal code 22 of binary type of the sub-area 24 precedingly mentioned is subdivided in such a manner that, as illustrated, P₁ ∼ P₄, P₅ ∼ P₈, P₉ ∼ P₁₂ and P₁₃ ∼ P₁₆ are divided into Q₁, Q₂, Q₃, and Q₄ groups resprectively, every groups having four elements. Said four groups are then recorded in terms of four assemblies 30, according to this embodiment. The method of sub-division of said sixteen sub-areas 24 into total four groups and sequence of arrangement of the signal codes 22 represented in the assemblies 30 may be selected as may be found necessary: for example, they may be (P₁, P₆, P₁₁, P₁₆/ P₅, P₁₀, P₁₅, P₄ / P₉, P₁₄, P₃, P₈ / P₂, P₇, P₁₂, P₁₃ ),(P₁, P₅, P₉, P₁₃,/ P₁₄, P₁₅, P₁₆, P₁₂/ P₈, P₄, P₃, P₂ / P₆, P₁₀, P₁₁, P₇ ),(P₁, P₂, P₆, P₅ / P₃, P₄, P₈, P₇ / P₁₁, P₁₂, P₁₆, P₁₅ / P₉, P₁₀, P₁₄, P₁₃ ) etc. and some other types of combination as may be found appropriately.

The selection of individual addresses of sixteen sub-areas 24 or P₁, P₂, · · ·, P₁₆ and the same of another sub-areas 24 to be choiced for individual groups Q₁, Q₂, Q₃, and Q₄ of the assemblies 30 permits a easier addition of cost information to the code of merchandise and ciphered expression of various cards and passwords etc., by changing properly through a microcomputer.

It is also to be noted that, in a representation area 20, is established an auxiliary representation area 36 defined by the extensions 32 and 34 of the X-axis and the Y-axis, as shown is in Fig.8 (a) and (b), represententing an extension of the X-axis 16 and the Y-axis 18, and in a proper location in the said auxiliary area 36, for example the periphery of representation area 20, such as an area diagonal to point of intersection between the X-axis 16 and the Y-axis 18 as illustrated in Fig.8 (a), in order to facilitate the recording an auxiliary mark 38 of a binary signal, as illustrated in Fig.8(b), in the periphery of the representation area 20. Said mark 38 needs not be limited to the rectangular shape as illustrated in Fig.8 and may have some other shapes, such as round, star, plus, and minus symbols etc., as may be found necessary.

According to the embodiment stated above, identification of the reading direction by a sensor is made much more ease and interpretation thereby more exact. Conventional inventions are said to involve, in the case of bar code, a failure of reading where reading angle deviates 45° or more away from the standard. Unlike this, the embodiment according to the invention ensures stabilized interpretation at a high level of the accuracy, regardless of a directional deviation of pasting of the identification code sheet on the merchandise and the same of reading.

Fig.9 represents another embodiment of the invention, showing the separation marks, wherein the representation area 20 is sub-divided by horizontal sub-area separation lines 40 and vertical sub-area separation lines 42, with their separation marks 44 printed at regular intervals.

According to the embodiment mentioned above, sub-areas in representation area may be readily filled up, using a suitable pencil or the likes, to make marks of solid or round etc., and entry of the identification code at the site of operation etc., where the pasting of the identification code sheet and correction of entry having been made can be done with extreme ease, and legiblity may be improved.

Fig.10 is further another embodiment of the invention, according to which the portions of intersection of horizontal sub-area sparation lines 40 with vertical sub-area separation lines 42 in the representation area 20 shown in Fig.9 are identified with separation marks 44 as illustrated.

According to the embodiment represented by Fig.10, a scope of the sub-area can be known by reading of said separation marks put at every intersection, which, in turn, ensure simplification and speed-up of the separation.

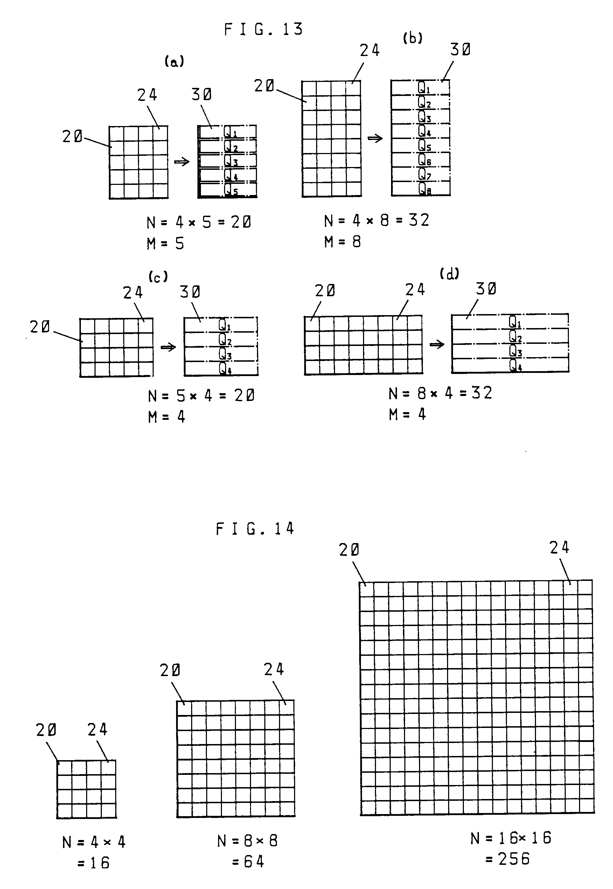

Fig.11 and Fig.12 are practical examples of the embodiment, respectively. In Fig.11 are printed, on the identification code sheet 10, representation areas 20 in form of crossed bars, and signal codes 22 and separation marks 44 in rectangular solid blacks, and in Fig.12 are printed out the dots according to the allotment as illustrated, by means of the microcomputer's printer. Any representation most suitable for a printing means may be made according to the embodiments represented by Fig.11 and Fig.12.

For the foregoing embodiments, descriptions having been made relate only to sixteen sub-areas 24 of the representation area 20. Non the less, they are applicable, as may be found necessary, also to the sub-areas of twenty or thirty-two etc. which are multiples of four as represented in Figs.13 (a) and (b), or said sub-areas 24 of five, six, seven · · · etc. for every assemblies 30 as illustrated in Figs.13 (c) and (d).

It is also achievable, with embodiments stated above, to provide the numbers of sub-areas as integer multiples of sixteen and the sames of the assemblies as integer multiples of four (or sames of groups as integer multiples of four). Assuming that the number of the sub-areas is 2 ⁿ and n is equal to five, or the same of the sub-areas is 2⁵ =32, the characters can then be expressed, for a single identification code, in terms of combinations of 0000, · · · · · VVVV, or 2 ³² = 4.292968 x 10⁹ which means a substantial rise in the coverage of the applicable number of the different characters. Furthermore, with n = 6, 7, · · ·, the coverage of the applicable numbers of the characters different by a single identification code then becomes 2²ⁿ which means a drastic expantion of the coverage mentioned in exponential function.

It is also achievable, with the said embodiment applied and the number of the assemblies expressed by 2^{n-m}, to expand exponential-functionally the number of the assemblies by raising m, according to a rise of n. For the embodiments described, sub-areas are divided into four groups, with n = 4 and m = 2. With n = 5, for m = 2 (2²=4), m =3 (2³ =8), division into eight groups, besides four groups, may also be had. Where the number of sub- areas is sixty four, with n = 6, division into sixteen groups may also be made, with m =4 (2⁴ =16), besides mentioned eight and/or sixteen groups, according to the embodiment represented by Fig.14.

According to the identification code which the invention concerns, encoding may be had to cover the characters as many as 2¹⁶=65536, even with a low n number of only four, but presently JIS rule Kana-Kanzi codes cover only a small amount of the order of about 7,700 characters, so that it may be reasonably claimed that the embodiments mentioned have an sufficient enough capacity of encoding the speech symbols of Thai, Arabic, Chinese characters etc. and even the same of speech synthesis which have not yet been encoded, for the purpose of register and representation.

For the embodiments described, the identification code sheet has only to be able to be checked to see the presence of a binary signal code for individual sub-areas of representation areas. This means an applicability of paper of ordinary quality to the make of the said sheet and no need for use of a special paper of unusual cost designed for special application, unlike the case with conventinal type bar code. According to the embodiment of the invention, no problem will be encountered in using the identification code sheet, because of reading a binary signal code in the representation area, defined by both the X-axis, and the Y-axis, although the size of code may vary case by case.

The identification code sheet mentioned above may be applied also to the papers for name card, card, plastic film and the carton's sheet etc. besides the ordinary paper.

The embodiment stated precedingly involves the representation area and/or signal codes to be printed visibly on a paper, a film and a carton's sheet etc., sometimes with transparent magnetic ink used. Printing made overlapping a prior printing of ordinary type enables the identification code readable as if reading were made for a plain print.

As noted, the representation area and the identification code should preferably be represented by printing or with magnetic ink, but conventional technics of conventional punch-type signals are in no case excluded from an application to meet the similar need.

Fig.15, Fig.16 and Fig.17 concern an example of the method of reading the identification code sheet 10 according to the invention.

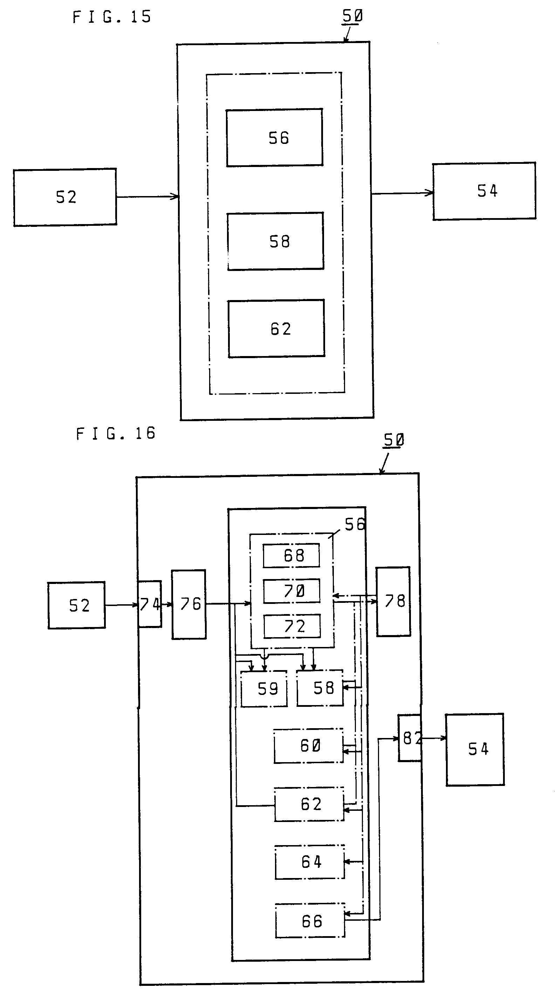

To a microcomputer 50, as shown in Fig.15 and Fig.16, is connected a reading sensor 52 such as a bar code reader to read the representation area 20 and signal codes 24 for signal input, followed by subsequent internal processing, result thereof being displayed on an output means 54 of CRT or a printer having been connected as described later. As illustrated, said computer 50 comprises a means 56 of determining representation areas, a means 58 of determining sub-areas, a means 60 of determining assemblies, a means 62 of detecting presence of binary signals, a means 64 of converting binary codes and a means 66 of converting codes for output means, the circuit thereof being set up by IC, LSI and the likes, respectively.

Said means 56 of determining representation areas is set up, as illustrated in Fig.16, by a means 68 of determining the X-axis, a means 70 of determining the Y-axis and a means 72 of correcting a direction of X-axis in order to enable the detection of the representation area 20 of the identification code sheet 10 affected by input from the senser 52 to read the identification code, through an interface 74 for reading the data and a means 76 of setting memories.

Said means 58 of determining sub-areas serves to divide the data having been input according to setting by a means 78 of setting memories or the means 56 of determining representation areas, at a required interval and into a required number of the sections in the direction of both the X-axis, and the Y-axis, and where separation marks 44 are present, to detect the marks 44 being followed by calculation for gaps between the marks and the X-Y axis to enable the division of the representation area 20 into the sub-areas 24 of a number as may be required.

Said means 60 of determining the assemblies serves to group said sub-areas 24 into the assemblies 30 as required through a means 59 of detecting separation marks and determining sub-areas or the likes, according to setting by the means 78 of setting the memories and combining with address having been stored in a predetermined number of groups of sub-area 24.

Said means 62 of detecting presence of binary signals is useful to find presence of binary signal marks 26 when the input proportional to predetermined area of said marks 26 having been input by graphic processing of sub-areas 24 is in a scope as required (for example, in case of an embodiment represented by Fig.12, a total sum corresponding to four to nine dots) and absence of the same when not.

Said means 64 of converting binary codes serves to determine an identification signal code through interpretation of presence of binary signal marks 26 of individual sub-areas 24, in order to transmit the same to the means 66 of converting code for the output unit. 82 stands for an interface for the output to the printer and CRT.

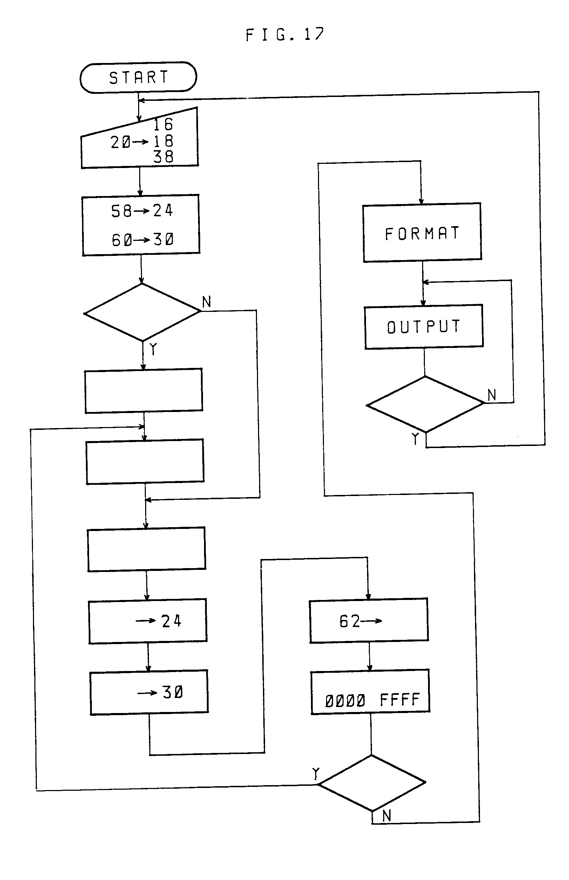

According to a manner described above, said interpretation is made, in pursuant to a flow chart shown in Fig.17, one by one, to see the X-axis 16, the Y-axis 18 and the auxiliary mark or the marks 38 etc. of the identification code sheet 10 read by said senser 52 through the means 56 of determining the representation areas, thus providing memories in suitable memory areas, in terms of bit image for a transmission of data of one or more as may be found necessary. Data having been so transmitted is then graphically processed for a rotation and a movement, depending on a means 72 of correcting a direction of the X-axis, and then allocation of both the sub-areas 24 and the assemblies 30 precedingly mentioned is made by said means 58 of determining sub-areas said means 60 of determining the assemblies respectively, in order to convert binary codes for preparation of a determined format to provide successive transmission to the output unit 54 of CRT or a printer. Calculation of extensions of both the X-axis and the Y-axis and auxiliary marks, made availing a graphic analysis, offers a fast determination of a direction of both the X-axis and the Y-axis, enabling graphic reversal or the likes as may be required.

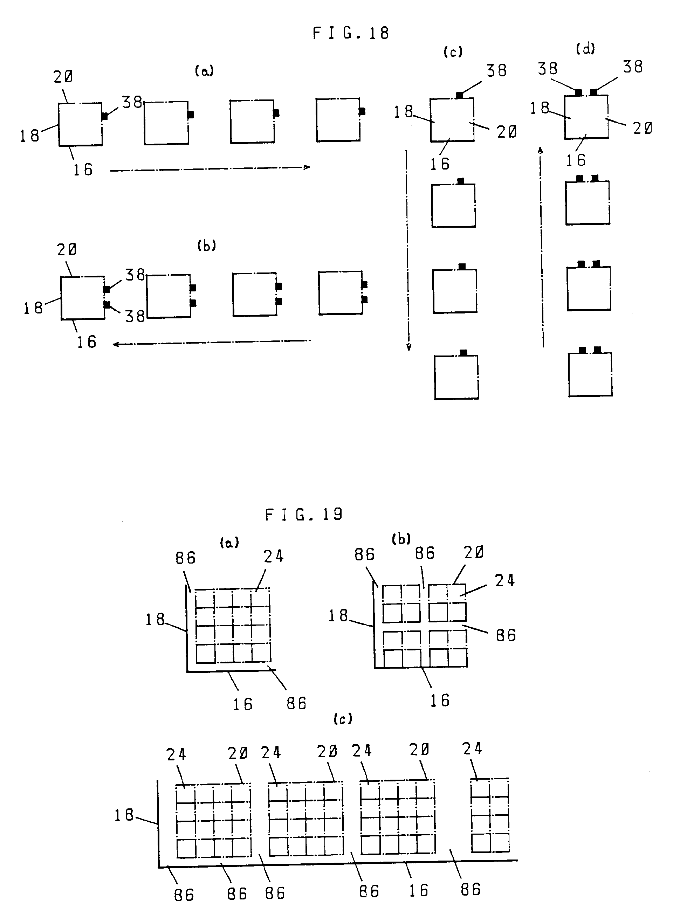

The embodiment mentioned involves a reading of an identification codes of the identification code sheet by properly moving a reading sensor such as a bar sensor: equivalent reading may be had by use of a surface sensor to find a two dimensional size of A4, B5 and B6 etc., for which indvidual representation areas may be determined according a direction of both said X-axis and said Y-axis and location of said auxiliary mark or marks as precedingly mentioned, and a direction of character strings may also be determined, depending on the location and the number of said auxiliary marks. For example, in case where, in the pheriphery of the Y-axis 18 of the representation area 20, is provided a single auxiliary mark 38, reading may proceed rightwards according to an arrow, and in another case where two auxiliary marks 38 are printed, reading may proceed leftwards according to another arrow, as shown in Figs.18 (a), and (b). And in still another case where, depending on the X-axis 16 of representation area 20, is printed the single auxiliary mark 38, reading may proceed downwards according to an arrow, and in further still another case where double auxiliary marks 38 are printed, the reading then proceed upwards according to an arrow, as shown in Figs.18 (c) and (d).

The location and the numbers of the auxiliary marks may also be used as a signal for determining a combination of the sub-areas composing an assembly.

Furthermore, as illustrated in Figs.19 (a) and (b), a disposition of gaps 86, both vertical and horizontal, to between said sub-areas 24 in the representation area 20 enables a clear distinction of said sub-areas 24 from both the X-axis 16 and the Y-axis 18 and operation of said representation area 20 at an improved level of accuracy, even if binary signal marks 26 of black solid dot have been put both horizontally and vertically, in all the sub-areas 24 arranged, the marks 44 and said binary signal marks 26 then being discontinuous, thus demonstrating a substantial preferability for accurate operation.

It should, however, be noted that it is possible to cause discrimination of a straight line of a series of said binary signal marks 26 from both axes X and Y, by interposing gaps 86 of blank area between the X-axis 16 and the sub-area 24 next thereto and between the Y-axis 18 and said sub-areas 24 next thereto, and that an intermitent disposition of said gaps 86 of blank area as illustrated in Fig.19 ensures both good result of finding, at an increased accuracy and simplicity in interpretation of the representation area at an improved ease.

Fig.19 (a) represents an embodiment of the invention where gaps 86 are located next to both the X-axis 16 and Y-axis 18 mentioned as illustrated in Fig.19(b), and said gaps 86 may be located in between the sub-areas 24 and further be used for instruction of direction of reading a character string or for the same of combination of the sub-areas setting up an assembly, by use of gaps as a signal in place of an auxiliary mark or marks, through a proper change of the location and numbers of said gaps 86. Further, binary codes may be printed, in a single representation area, for a plurality of Kana-Kanzi letters, by interposing a split for every 2 ⁿ sub-areas as shown in Fig.19 (c).

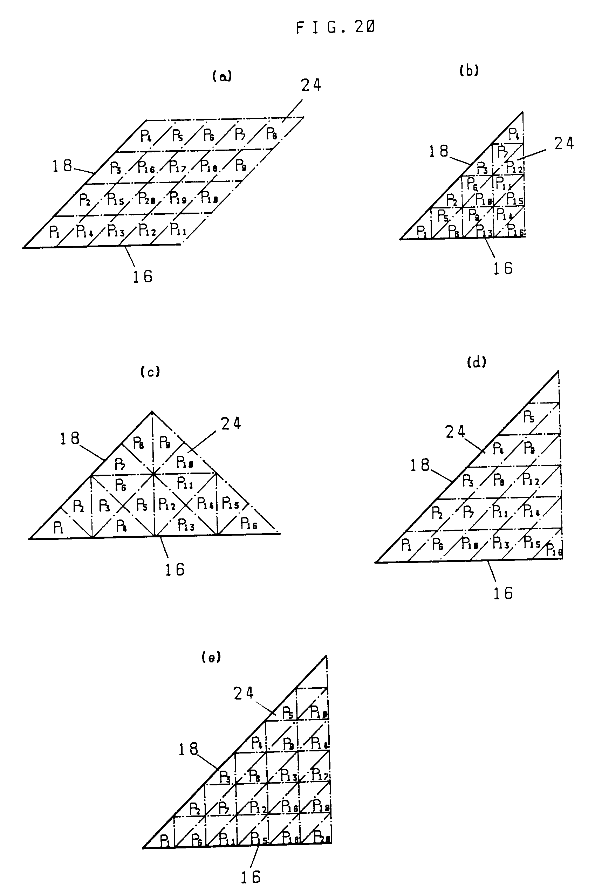

In the embodiments described, the X-axis and the Y-axis are arranged in mutual orthgonality, but they may be disposed intersected at a suitable angle as exampled in Figs.20 (a), (b), (c) and (d), and moreover they may have any shapes other than a rectangle.

All the embodiments described precedingly concern a processing in form of a single task to perform a computer proccessing, but may also ensure a higher speed of input of a senser output to memory areas, the operation and the output in a multitask system.

Various embodiments have been described precedingly merely to aid the understanding of the invention, and variations may be made by one skilled in the art without departing from the spirit and the essential features of the invention, being not limited to the specific embodiments mentioned.

## Claims

1. A method of reading an identification code sheet carrying an identification code by means of a sensor, the identification code sheet comprising
- an identification code area (20)
- being defined by two lines (16, 18) representing an X-axis and an Y-axis, respectively, by which lines an L-shaped letter is formed and
- being provided to serve as a reserved space for the identification code; and
- a plurality of sub-areas (24)
- being defined in said identification code area (20) in that said identification code area (20) is divided into said sub-areas (24) by separation marks (44),
- each sub-area (24) corresponding to one binary signal of the identification code;
the method comprising the steps of:
- detecting with said sensor (52) the line (16) representing the X-axis defining the identification code area (20);
- detecting with said sensor (52) the line (18) representing the Y-axis defining the identification code area (20);
- determining the identification code area (20) defined by said detected lines (16, 18);
- detecting with said sensor (52) said separation marks (44) in the identification code area (20);
- identifying said sub-areas (24) depending on said detected separation marks (44); and
- interpreting the signal code represented in the form of binary signals in said sub-areas (24) within the identification code area (20).

2. A method according to claim 1, wherein said identification code area (20) is for one character, for example Chinese letter.

3. A method according to claim 1 or 2, wherein said sub-areas (24) of said identification code area are grouped into four or more assemblies (30).

4. A method according to claims 1 to 3, wherein an auxiliary area (36) is provided in the periphery of said identification code area and an auxiliary mark (38) is provided in said auxiliary area (36).

5. A method according to claim 4, wherein said auxiliary mark (38) is provided at the diagonal corner portion to the point of intersection of said lines (16, 18) representing an X- and Y-axis, respectively.

6. A method according to claims 1 to 5, wherein said separation marks (44) are provided between said sub-areas (24), at respective corners of said sub-areas, thereby forming a dotted line pattern.

7. A method according to claims 1 to 5, wherein the separation marks (44) are provided in a lattice pattern.

8. A method according to claims 1 to 7, wherein said separation marks (44) are provided in a smaller size than the signal codes printed in said sub-areas (24).

9. A method according to any of claims 4 - 8 characterized in that a reading direction is found depending on the detection of said auxiliary mark (38).

## Patentansprüche

1. Verfahren zum Lesen eines einen Identifikationscode tragenden Identifikationscode-Blattes mittels eines Sensors, wobei das Identifikationscode-Blatt umfaßt:
- ein Identifikationscodegebiet (20),
- welches durch zwei Linien (16, 18) definiert wird, die eine X-Achse bzw. eine Y-Achse darstellen, mittels welcher Linien ein L-förmiger Buchstabe gebildet wird, und
- welches vorgesehen ist, als reservierter Raum für den Identifikationscode zu dienen; und
- eine Vielzahl von Untergebieten (24),
- welche in dem Identifikationscodegebiet (20) dadurch definiert sind, daß das Identifikationscodegebiet (20) in die Untergebiete (24) durch Trennmarkierungen (44) geteilt wird,
- wobei jedes Untergebiet (24) einem binären Signal des Identifikationscodes entspricht;
wobei das Verfahren die Schritte umfaßt:
- mit dem Sensor (52) die Linie (16) erfassen, welche die X-Achse darstellt, die das Identifikationscodegebiet (20) definiert;
- mit dem Sensor (52) Erfassen der Linie (18), welche die Y-Achse darstellt, die das Identifikationscodegebiet (20) definiert;
- Bestimmen des Identifikationscodegebiets (20), welches durch die erfaßten Linien (16, 18) definiert ist;
- mit dem Sensor (52) Erfassen der Trennmarkierungen (44) in dem Identifikationscodegebiet (20);
- Identifizieren der Untergebiete (24) abhängig von den erfaßten Trennmarkierungen (44); und
- Interpretieren des in der Form von binären Signalen in den Untergebieten (24) in dem Identifikationscodegebiet (20) dargestellten Signalcodes.

2. Verfahren nach Anspruch 1, dadurch gekennzeichnet, daß das Identifikationscodegebiet (20) für ein Zeichen vorgesehen ist, beispielsweise einen chinesischen Buchstaben.

3. Verfahren nach Anspruch 1 oder 2, dadurch gekennzeichnet, daß die Untergebiete (24) des Identifikationscodegebiets in vier oder mehr Zusammenstellungen (30) gruppiert sind.

4. Verfahren nach einem der Ansprüche 1 bis 3, dadurch gekennzeichnet, daß ein Hilfsgebiet (36) in der Peripherie des Identifikationscodegebiets vorgesehen ist und eine Hilfsmarkierung (38) in dem Hilfsgebiet (36) vorgesehen ist.

5. Verfahren nach Anspruch 4, dadurch gekennzeichnet, daß die Hilfsmarkierung (38) an dem diagonalen Eckenabschnitt zu dem Schnittpunkt der Linien (16, 18), welche eine X- bzw. Y-Achse darstellen, vorgesehen ist.

6. Verfahren nach einem der Ansprüche 1 bis 5, dadurch gekennzeichnet, daß die Trennmarkierungen (44) zwischen den Untergebieten (24) an jeweiligen Ecken der Untergebiete vorgesehen sind, wodurch ein gepunktetes Linienmuster gebildet wird.

7. Verfahren nach einem der Ansprüche 1 bis 5, dadurch gekennzeichnet, daß die Trennmarkierungen (44) in einem Gittermuster vorgesehen sind.

8. Verfahren nach einem der Ansprüche 1 bis 7, dadurch gekennzeichnet, daß die Trennmarkierungen (44) in kleineren Größen als die in den Untergebieten (24) gedruckten Signalcodes vorgesehen sind.

9. Verfahren nach einem der Ansprüche 4 bis 8, dadurch gekennzeichnet, daß eine Leserichtung abhängig von der Erfassung der Hilfsmarkierung (38) gefunden wird.

## Revendications

1. Procédé de lecture d'une feuille de code d'identification portant un code d'identification au moyen d'un capteur, la feuille de code d'identification comprenant
- une zone de code d'identification (20)
- étant définie par deux lignes (16, 18) représentant un axe X et un axe Y, respectivement, par lesquelles lignes une lettre en forme de L est formée, et
- étant prévue pour servir comme un espace réservé pour le code d'identification, et
- une pluralité de sous-zones (24)
- étant définies dans ladite zone de code d'identification (20) en ce que ladite zone de code d'identification (20) est divisée en lesdites sous-zones (24) par des marques de séparation (44),
- chaque sous-zone (24) correspondant à un signal binaire du code d'identification,
le procédé comprenant les étapes consistant à :
- détecter avec ledit capteur (52) la ligne (16) représentant l'axe X définissant la zone de code d'identification (20),
- déterminer avec ledit capteur (52) la ligne (18) représentant l'axe Y définissant la zone de code d'identification (20),
- déterminer la zone de code d'identification (20) définie par lesdites lignes détectées (16, 18),
- détecter avec ledit capteur (52) lesdites marques de séparation (44) dans la zone de code d'identification (20),
- identifier lesdites sous-zones (24) en fonction desdites marques de séparation détectées (44), et
- interpréter le code de signal représenté sous la forme de signaux binaires dans lesdites sous-zones (24) à l'intérieur de la zone de code d'identification (20).

2. Procédé selon la revendication 1, dans lequel ladite zone de code d'identification (20) est destinée à un caractère, par exemple, une lettre chinoise.

3. Procédé selon la revendication 1 ou la revendication 2, dans lequel lesdites sous-zones (24) de ladite zone de code d'identification sont groupées en quatre ensembles (30) ou plus.

4. Procédé selon les revendications 1 à 3, dans lequel une zone auxiliaire (36) est prévue à la périphérie de ladite zone de code d'identification et une marque auxiliaire (38) est prévue sur ladite zone auxiliaire (36).

5. Procédé selon la revendication 4, dans lequel ladite marque auxiliaire (38) est prévue sur la partie de coin en diagonal du point d'intersection desdites lignes (16, 18) représentant un axe X et un axe Y, respectivement.

6. Procédé selon les revendications 1 à 5, dans lequel lesdites marques de séparation (44) sont prévues entre lesdites sous-zones (24) aux coins respectifs desdites sous-zones, formant de ce fait une configuration de lignes de points.

7. Procédé selon les revendications 1 a 5, dans lequel les marques de séparation (44) sont prévues en une configuration de réseau.

8. Procédé selon les revendications 1 à 7, dans lequel lesdites marques de séparation (44) sont prévues d'une dimension inférieure aux codes de signal imprimés dans lesdites sous-zones (24).

9. Procédé selon l'une quelconque des revendications 4 à 8, caractérisé en ce qu'une direction de lecture est trouvée en fonction de la détection de ladite marque auxiliaire (38).
